# EUROPÄISCHE PATENTSCHRIFT

(11) **EP 2 762 285 B1**
(45) Veröffentlichungstag und Bekanntmachung des Hinweises auf die Patenterteilung: **23.12.2015**
(21) Anmeldenummer: 13175655.3
(22) Anmeldetag: 09.07.2013
(51) Int. Cl.: B28C 5/42, F16C 23/08, F16C 19/38

(54) **Fahrmischergetriebe mit asymmetrischem Pendelrollenlager zur Lagerung der Ausgangswelle**
Gear of a truck mounted mixer with an asymmetrical spherical roller bearing supporting the output shaft.
Engrenage de bétonnière sur camion avec roulement asymétrique à rotule sur rouleaux supportant l'arbre de sortie

(30) Priorität: 14.08.2012 DE 102012214432
(43) Veröffentlichungstag der Anmeldung: 06.08.2014
(73) Patentinhaber: Schaeffler Technologies AG & Co. KG, 91074 Herzogenaurach (DE)
(72) Erfinder: Lippert, Roland, 90592 Schwarzenbruck (DE); Sapper, Jürgen, 90766 Fürth (DE)

(56) Entgegenhaltungen:
- DE-A1- 19 606 312
- DE-A1-102004 047 881
- DE-A1-102010 054 318
- DE-C- 331 454
- JP-A- 2004 245 251
- US-A- 4 006 946

## Beschreibung

### Gebiet der Erfindung

Die Erfindung betrifft ein Fahrmischergetriebe, umfassend ein Ausgangslager zur drehbaren Lagerung einer Ausgangswelle gegenüber einem Getriebegehäuse, wobei die Ausgangswelle gegenüber einer waagrechten Ebene unter einem Winkel (α) geneigt angeordnet ist und wobei das Ausgangslager durch ein Pendelrollenlager gebildet wird, dessen Wälzkörper in zwei Lagerreihen unter Druckwinkeln (β,γ) um eine Lagerachse abrollen.

### Hintergrund der Erfindung

Fahrmischergetriebe werden in Fahrmischem (z.B. Transportbetonmischer) eingesetzt um die gegenüber einer waagrechten Ebene unter einem Winkel (α) geneigte Trommel mit einer gewünschten Ausgangsdrehzahl in Drehbewegung zu versetzen. Die im Wesentlichen zylindrische Trommel ist dabei mit einem geschlossenen unteren, d.h. näher an der waagrechten Ebene angeordneten Ende, mit dem Getriebe verbunden und durch ein Ausgangslager des Getriebes in selbigen gelagert. An einem zweiten mit einer Öffnung versehenen Ende der Trommel ist diese über eine zweite Lagerung gegenüber dem Gehäuse drehbar gelagert. Während diese zweite Lagerung nur Radialkräfte aufnimmt (z.B. Laufrollenlagerung) muss das Ausgangslager des Getriebes sowohl Radial- als auch Axialkräfte aufnehmen. Aufgrund der Schiefstellung der Trommel sowie den widrigen Einsatzbedingungen (teilweise nicht optimale Schmierung, sehr geringe Drehgeschwindigkeiten, hohe und zum teil stoßartige Belastungen etc.) muss das Ausgangslager entsprechend groß dimensioniert werden.

Typischerweise wird als Ausgangslager ein zweireihiges Pendelrollenlager eingesetzt, da dieses sowohl hohe Radial- als auch hohe Axialkräfte aufnehmen kann. Das Pendelrollenlager wird gegenüber einer waagrechten Ebene unter einem Winkel (α) geneigt eingebaut, um der entsprechenden Neigung der Trommelrotationsachse Rechnung zu tragen. Darüber hinaus ermöglicht ein Pendelrollenlager bauartbedingt eine Winkelausgleichsmöglichkeit, um dynamische Winkeländerungen der Trommelrotationsachse kompensieren zu können.

Die Dimensionierung derartiger Ausgangslager erfolgt unter dem Gesichtspunkt, dass bei einer Lagerauslegung unter den vorgegebenen Begebenheiten (Kräfte, Schmierung, Temperatur, etc.) die gewünschte Lebensdauer erreicht wird. Die Beeinflussung der Lebensdauer erfolgt dabei durch die Dimensionierung (im Sinne einer "Skalierung") des Pendelrollenlagers, was bei dem gegebenen Bauraum herausfordernd sein kann.

Aus der DE4034139A1 ist eine Getriebeanordnung für einen Transportbetonmischer bekannt, dessen Planentengetriebe eine in einem Abtriebsflansch übergehende Welle aufweist, die mittels einem Pendelrollenlager gegenüber einem Mischergetriebegehäuse gelagert ist.

Lösungen mit Pendelrollenlagern zur Lagerung der Trommel eines Fahrmischers sind auch aus folgenden Veröffentlichungen bekannt: DE19829411A1, DE2111073A1, DE2753246A1, DE4314218B4, DE7736479U und DE8326270U1.

Aus der DE102004038502A1 ist ein Getriebe zum Antrieb einer Trommel eines Fahrmischers bekannt, wobei eine Welle mittels einer Kegelrollenlagerung im Gehäuse gelagert ist, indem die Kegelrollenlagerung zwei axial beabstandete einreihige Kegelrollenlager mit gleichem Bohrungsdurchmesser und unterschiedlichem Außendurchmesser aufweist. Von Nachteil bei der Lösung der DE102004038502A1 ist, dass die Lagerung über zwei separate, einreihige Kegelrollenlager aufwendig und teuer ist und der Einbauraum an die unterschiedlichen Außendurchmesser angepasst werden muss.

Aus der EP 1 705 392 B1 ist ein zweireihiges Pendelrollenlager zur Lagerung einer Getriebehauptwelle einer Windenergieanlage bekannt, dessen zwei Lagerreihen Wälzkörper mit unterschiedlicher Länge und unterschiedliche Druckwinkel aufweisen.

Aus US 4 006 946 A ist ein Fahrmischergetriebe mit den Merkmalen gemäß Oberbegriff des Anspruchs 1 bekannt.

Aus DE 10 2004 047 881 A1 ist eine zweireihiges Pendelrollenlager bekannt, dessen beide Reihen von Rollenkörpern unterschiedliche Druckwinkel aufweisen, wobei die Axiallastseite einen größeren Druckwinkel besitzt als der Druckwinkel der anderen gegenüberliegenden Seite. Ziel hierbei ist eine Erhöhung der Belastbarkeit.

### Aufgabe der Erfindung

Der vorliegenden Erfindung liegt die Aufgabe zugrunde, ein gattungsgemäßes Fahrmischergetriebe bereitzustellen, welches eine hohe Lebensdauer bei geringen Abmaßen aufweist und welches einfach und kostengünstig hergestellt und montiert werden kann.

### Beschreibung der Erfindung

Diese Aufgabe wird durch ein Fahrmischergetriebe gemäß dem unabhängigen Anspruch gelöst. Demzufolge ist ein gattungsgemäßes Fahrmischergetriebe dadurch gekennzeichnet, dass die Druckwinkel (β,γ) der zwei Lagerreihen voneinander verschieden sind.

Die Erfindung beruht auf der Erkenntnis, dass bereits die relativ geringe Neigung der Trommelrotationsachse gegenüber einer waagrechten Ebene zu einer erheblichen Axialkraftbeaufschlagung des Ausgangslagers führen kann. Insbesondere bei einer beladenen Trommel und bei Abbremsvorgängen des Fahrmischers wird somit eine der zwei Lagerreihen übermäßig stark beansprucht.

Anstelle den üblichen Weg einer entsprechenden Dimensionierung des Ausgangslagers zu wählen oder aber z.B. zwei axial voneinander beabstandete einzelne Kegelrollenlager einzusetzen, setzt die Erfindung auf eine spezifische, konstruktive Gestaltung des Pendelrollenlagers: Durch den asymmetrischen Aufbau des Pendelrollenlagers sollen die asymmetrisch einwirkenden Belastungen optimal aufgenommen werden können. Indem weiterhin ein Pendelrollenlager eingesetzt wird, ist es möglich, sich im Betrieb ergebende zusätzliche Verkippungen der Trommelrotationsachse (z.B. durch Unwuchten) problemlos aufzunehmen. Auch wird erfindungsgemäß ermöglicht, das Ausgangslager in einer einzigen Lagerstelle auszubilden, so dass sich ein sehr kompakter Aufbau ergibt, der problemlos in eine vorgegebene Umgebungskonstruktion integriert werden kann.

Es zeigte sich, dass die Wahl der Druckwinkel in Bezug zu jenem Winkel (α) gesetzt werden kann, unter dem die Ausgangswelle gegenüber einer waagrechten Ebene geneigt ist: So ist vorgesehen, dass für eine Differenz (δ) der Druckwinkel der zwei Lagerreihen 0,9 · α < δ < 1,1 · α gilt. Die Differenz (δ) wird bestimmt durch |β - γ|. Die Druckwinkel β, γ werden jeweils als positive Zahl jenes Winkels angegeben, um den eine Drucklinie gegenüber einer in einem Axialschnitt senkrecht zur Lagerachse stehenden Ebene geneigt ist.

Das Getriebe kann z.B. durch ein Planetengetriebe gebildet werden.

Bevorzugte Ausführungsformen sind in den Unteransprüchen angegeben.

Gemäß einer Ausführungsform ist vorgesehen, dass sich die Druckwinkel der zwei Lagerreihen auf der Lagerachse schneiden. Eine optimale Kinematik des Pendelrollenlagers wird erreicht; die Wälzkörper beider Lagerreihen rollen mit der kinematischen Drehzahl um die Lagerachse ab.

Eine sehr gute, d.h. gleichmäßige, Belastung der zwei Lagerreihen ergab sich, wenn der Druckwinkel einer ersten Lagerreihe größer 10 Grad beträgt und wenn der Druckwinkel einer zweiten Lagerreihe kleiner 10 Grad beträgt. Die gleichmäßige Belastung führte zu einer optimalen Ausnutzung des Pendelrollenlagers und folglich einer maximalen Ausnutzung des vorliegenden Bauraumes.

Möglich ist, dass der Druckwinkel einer der zwei Lagerreihen 0 Grad beträgt. Diese Lagerreihe ist somit vorwiegend zur Radialkraftübertragung vorgesehen, kann jedoch aufgrund der Form der Wälzkörper (Tonnenrollen) auch geringe Axialkraftkomponenten in beiden Axialrichtungen übertragen. Die andere der beiden Lagerreihen weist folglich einen von 0 Grad verschiedenen (d.h. größeren) Druckwinkel auf und kann die Hauptaxialkräfte aufnehmen.

Möglich ist auch, dass die Anzahl der Wälzkörper der zwei Lagerreihen unterschiedlich ist. Auch diese Maßnahme kann - unterstützend - zur Reduzierung ungleichmäßigen Belastung der zwei Lagerreihen, insbesondere der Laufbahnen der Lagerringe, beitragen. Um eine einfache Montage zu ermöglichen, kann vorgesehen werden, dass das Pendelrollenlager einen einteiligen Außenring und/oder einen einteiligen Innenring aufweist.

Eine einfache Integration in eine bestehende Anschlusskonstruktion, kann erreicht werden, indem eine axiale Erstreckung des Außenringes größer ist als eine axiale Erstreckung des Innenringes. Vorzugsweise ist dabei vorgesehen, dass der Außenring den Innenring axial zu beiden Seiten überragt. In diesem Fall wird ein Verkippen des Außenringes gegenüber dem Innenring innerhalb des Pendelrollenlagers aufgenommen, d.h. die Anschlusskonstruktion muss keine entsprechenden Freiräume hierfür vorsehen.

### Kurze Beschreibung der Zeichnungen

Ausführungsbeispiele der vorliegenden Erfindung werden im Folgenden anhand der beigefügten Figuren erläutert. Dabei zeigen
- Fig. 1: einen Fahrmischer, umfassend ein erfindungsgemäßes Fahrmischergetriebe,
- Fig. 2: ein Pendelrollenlager gemäß einem ersten Ausführungsbeispiel der Erfindung und

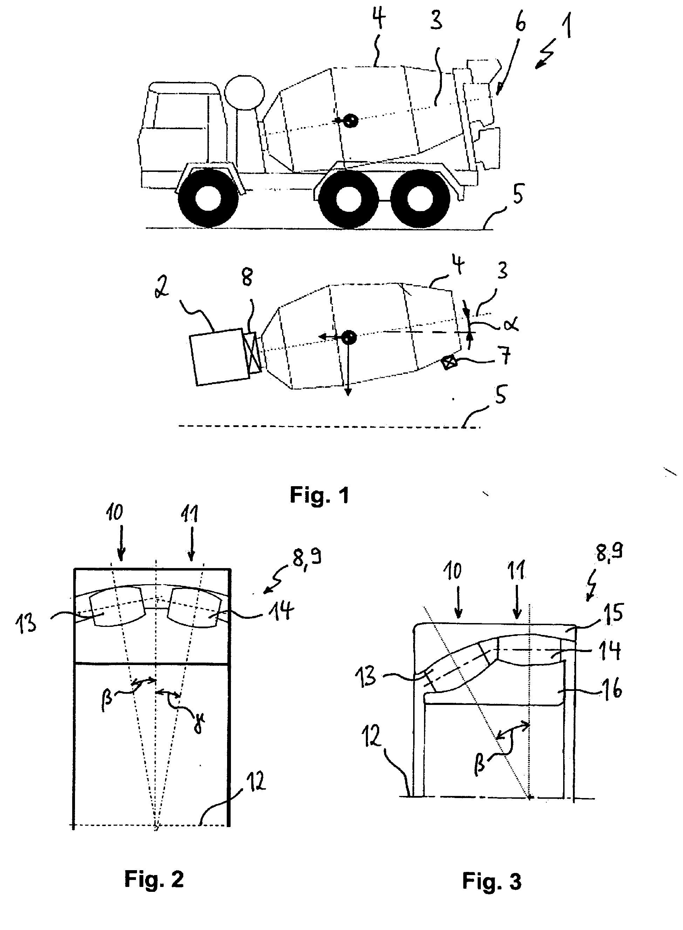

- Fig. 2: ein Pendelrollenlager gemäß einem zweiten Ausführungsbeispiel der Erfindung.

### Ausführliche Beschreibung der Zeichnungen

Gleiche oder funktionsgleiche Elemente sind durch gleiche Bezugszeichen in den Figuren gekennzeichnet.

Fig. 1 zeigt einen Fahrmischer 1, umfassend ein erfindungsgemäßes Fahrmischergetriebe 2, welches mit einer um eine Trommelrotationsachse 3 drehbaren Trommel 4 verbunden ist und diese antreibt. Die Trommel 4 ist gegenüber einer waagrechten Ebene 5 unter einem Winkel α geneigt angeordnet. An einem offenen Ende 6 ist die Trommel 4 radial durch ein Radiallager 7 gelagert; das Radiallager 7 nimmt nur senkrecht zur waagrechten Ebene 5 wirkende Radialkräfte auf. An dem Fahrmischergetriebe 2 ist die Trommel 4 an einer nicht dargestellten Ausgangswelle angeschlossen und über ein Ausgangslager 8 um die Trommelrotationsachse 3 drehbar gelagert. Das Ausgangslager 8 kann sowohl Radialkräfte als auch Axialkräfte aufnehmen und wird durch ein zweireihiges Pendelrollenlager gebildet.

Erfindungsgemäß weisen die zwei Lagerreihen des Pendelrollenlagers dabei unterschiedliche Druckwinkel auf.

Ein Pendelrollenlager 9 gemäß einem ersten Ausführungsbeispiel der Erfindung zum Einsatz in dem Fahrmischergetriebe 2 nach Fig. 1 ist in Fig. 2 dargestellt. Gezeigt ist die obere Hälfte eines die Lagerachse 12 umfassenden Axialschnittes. Die beiden Druckwinkel schneiden sich auf der Lagerachse 12 in einem Punkt.

Das Pendelrollenlager 9 weist zwei axial bezüglich der Lagerachse 12 beabstandete Lagerreihen 10, 11 auf, deren Druckwinkel β, γ voneinander verschieden sind - in der Zeichnung nicht zu erkennen. Der Unterschied der Druckwinkel β, γ ist führt zu einer unterschiedlich großen Aufnahme von Axialkräften in den zwei Lagerreihen 10, 11. Beide Lagerreihen 10, 11 wiesen identische Wälzkörper 13, 14, nämlich Tonnenrollen, auf. Diese können über einen Käfig umfänglich beabstandet und geführt werden.

Die Außenmaße des Pendelrollenlagers 9 können bei einem geringfügigen Unterschied der Druckwinkel denen eines Standardpendelrollenlagers entsprechen, so dass keine Neukonstruktion der Umgebungskonstruktion erforderlich ist.

Fig. 3 zeigt ein Pendelrollenlager gemäß einem zweiten Ausführungsbeispiel der Erfindung. Im Gegensatz zum ersten Ausführungsbeispiel ist der Unterschied der Druckwinkel β, γ stärker ausgeprägt und mit bloßem Auge sofort erkennbar: Der Druckwinkel β der ersten Lagerreihe 10 ist in etwa doppelt so groß wie ein typischer Druckwinkel eines Pendelrollenlagers. Der Druckwinkel γ der zweiten Lagerreihe 11 hingegen beträgt 0 Grad.

Der Außenring 15 besitzt eine größere axiale Erstreckung als der Innenring 16 und überragt diesen in axialer Richtung beidseitig. Auch bei einem maximalen Verschwenken des Innenringes 16 gegenüber dem Außenring 15 bleibt der Innenring 16 somit axial innerhalb des Außenringes.

### Bezugszeichenliste

- 1: Fahrmischer
- 2: Fahrmischergetriebe
- 3: Trommelrotationsachse
- 4: Trommel
- 5: waagrechte Ebene
- 6: Ende
- 7: Radiallager
- 8: Ausgangslager
- 9: Pendelrollenlager
- 10: Lagerreihe
- 11: Lagerreihe
- 12: Lagerachse
- 13: Wälzkörper
- 14: Wälzkörper
- 15: Außenring
- 16: Innenring
- α: Neigungswinkel
- β: Druckwinkel
- γ: Druckwinkel
- δ: Differenz der Druckwinkel

## Patentansprüche

1. Fahrmischergetriebe (2), umfassend ein Ausgangslager (8) zur drehbaren Lagerung einer Ausgangswelle gegenüber einem Getriebegehäuse, wobei die Ausgangswelle gegenüber einer waagrechten Ebene (5) unter einem Winkel (α) geneigt angeordnet ist und wobei das Ausgangslager (8) durch ein Pendelrollenlager (9) gebildet wird, dessen Wälzkörper (13,14) in zwei Lagerreihen (10,11) unter Druckwinkeln (β,γ) um eine Lagerachse (12) abrollen, **dadurch gekennzeichnet, dass** die Druckwinkel (β,γ) der zwei Lagerreihen (10,11) voneinander verschieden sind und für eine Differenz (δ) der Druckwinkel (β,γ) der zwei Lagerreihen (10,11) 0.9 · α < δ < 1,1 · α gilt.

2. Fahrmischergetriebe (2) nach Anspruch 1, **dadurch gekennzeichnet, dass** sich die Druckwinkel (β,γ) der zwei Lagerreihen (10,11) auf der Lagerachse (12) schneiden.

3. Fahrmischergetriebe (2) nach Anspruch 1 oder 2, **dadurch gekennzeichnet, dass** der Druckwinkel (β,γ) einer ersten Lagerreihe (10,11) größer 10 Grad beträgt und dass der Druckwinkel (β,γ) einer zweiten Lagerreihe (10,11) kleiner 10 Grad beträgt.

4. Fahrmischergetriebe (2) nach einem der vorangegangenen Ansprüche, **dadurch gekennzeichnet, dass** der Druckwinkel (γ) einer der zwei Lagerreihen (11) 0 Grad beträgt.

5. Fahrmischergetriebe (2) nach einem der vorangegangenen Ansprüche, **dadurch gekennzeichnet, dass** die Anzahl der Wälzkörper (13,14) der zwei Lagerreihen (10,11) unterschiedlich ist.

6. Fahrmischergetriebe (2) nach einem der vorangegangenen Ansprüche, **dadurch gekennzeichnet, dass** das Pendelrollenlager (9) einen einteiligen Außenring (15) und/oder einen einteiligen Innenring (16) aufweist.

7. Fahrmischergetriebe (2) nach einem der vorangegangenen Ansprüche, **dadurch gekennzeichnet, dass** eine axiale Erstreckung des Außenringes (15) größer ist als eine axiale Erstreckung des Innenringes (16).

8. Fahrmischergetriebe (2) nach Anspruch 7, **dadurch gekennzeichnet, dass** der Außenring (15) den Innenring (16) axial zu beiden Seiten überragt.

9. Fahrmischergetriebe (2) nach einem der vorangegangenen Ansprüche, **dadurch gekennzeichnet, dass** die Wälzkörper (13,14) der zwei Lagerreihen (10,11) voneinander verschieden sind

## Claims

1. Transport mixer transmission (2), comprising an output bearing (8) for rotatably mounting an output shaft with respect to a transmission housing, the output shaft being arranged such that it is inclined at an angle (α) with respect to a horizontal plane (5), and the output bearing (8) being formed by a self-aligning roller bearing (9), the rolling bodies (13, 14) of which roll in two bearing rows (10, 11) at contact angles (β, γ) about a bearing axis (12), **characterized in that** the contact angles (β, γ) of the two bearing rows (10, 11) are different from one another and the following applies for a difference (δ) of the contact angles (β, γ) of the two bearing rows (10, 11) : 0.9 • α < δ < 1.1 • α.

2. Transport mixer transmission (2) according to Claim 1, **characterized in that** the contact angles (β, γ) of the two bearing rows (10, 11) intersect on the bearing axis (12).

3. Transport mixer transmission (2) according to Claim 1 or 2, **characterized in that** the contact angle (β, γ) of a first bearing row (10, 11) is greater than 10 degrees, and **in that** the contact angle (β, γ) of a second bearing row (10, 11) is less than 10 degrees.

4. Transport mixer transmission (2) according to one of the preceding claims, **characterized in that** the contact angle (γ) of one of the two bearing rows (11) is 0 degrees.

5. Transport mixer transmission (2) according to one of the preceding claims, **characterized in that** the number of rolling bodies (13, 14) of the two bearing rows (10, 11) is different.

6. Transport mixer transmission (2) according to one of the preceding claims, **characterized in that** the self-aligning roller bearing (9) has a single-piece outer ring (15) and/or a single-piece inner ring (16).

7. Transport mixer transmission (2) according to one of the preceding claims, **characterized in that** an axial extent of the outer ring (15) is greater than an axial extent of the inner ring (16).

8. Transport mixer transmission (2) according to Claim 7, **characterized in that** the outer ring (15) protrudes beyond the inner ring (16) axially on both sides.

9. Transport mixer transmission (2) according to one of the preceding claims, **characterized in that** the rolling bodies (13, 14) of the two bearing rows (10, 11) are different from one another.

## Revendications

1. Engrenage de bétonnière (2), comprenant un palier de sortie (8) pour le support rotatif d'un arbre de sortie par rapport à un carter d'engrenage, dans lequel l'arbre de sortie est disposé de façon inclinée d'un angle (α) par rapport à un plan horizontal (5) et dans lequel le palier de sortie (8) est formé par un roulement à rotule sur rouleaux (9), dont les corps de roulement (13, 14) roulent en deux rangées de palier (10, 11) sous des angles de pression (β, γ) autour d'un axe de palier (12), **caractérisé en ce que** les angles de pression (β, γ) des deux rangées de palier (10, 11) sont différents l'un de l'autre et, pour une différence (δ) des angles de pression (β, γ) des deux rangées de palier (10, 11), on a 0,9·α < δ < 1,1·α.

2. Engrenage de bétonnière (2) selon la revendication 1, **caractérisé en ce que** les angles de pression (β, γ) des deux rangées de palier (10, 11) se coupent sur l'axe de palier (12).

3. Engrenage de bétonnière (2) selon la revendication 1 ou 2, **caractérisé en ce que** l'angle de pression (β, γ) d'une première rangée de palier (10, 11) vaut plus de 10 degrés et **en ce que** l' angle de pression (β, γ) d'une deuxième rangée de palier (10, 11) vaut moins de 10 degrés.

4. Engrenage de bétonnière (2) selon l'une quelconque des revendications précédentes, **caractérisé en ce que** l'angle de pression (γ) d'une des deux rangées de palier (11) vaut 0 degré.

5. Engrenage de bétonnière (2) selon l'une quelconque des revendications précédentes, **caractérisé en ce que** le nombre des corps de roulement (13, 14) des deux rangées de palier (10, 11) est différent.

6. Engrenage de bétonnière (2) selon l'une quelconque des revendications précédentes, **caractérisé en ce que** le roulement à rotule sur rouleaux (9) présente une bague extérieure (15) en une seule pièce et/ou une bague intérieure (16) en une seule pièce.

7. Engrenage de bétonnière (2) selon l'une quelconque des revendications précédentes, **caractérisé en ce qu'**une extension axiale de la bague extérieure (15) est plus grande qu'une extension axiale de la bague intérieure (16).

8. Engrenage de bétonnière (2) selon la revendication 7, **caractérisé en ce que** la bague extérieure (15) dépasse axialement la bague intérieure (16) sur les deux côtés.

9. Engrenage de bétonnière (2) selon l'une quelconque des revendications précédentes, **caractérisé en ce que** les corps de roulement (13, 14) des deux rangées de palier (10, 11) sont différents les uns des autres.
